(19) **Europäisches Patentamt**
**European Patent Office**
**Office européen des brevets**

(11) **EP 1 212 852 B1**

(12) **EUROPEAN PATENT SPECIFICATION**

(45) Date of publication and mention
of the grant of the patent:
**07.02.2007 Bulletin 2007/06**

(51) Int Cl.:
**H04B 7/26** (2006.01)

(21) Application number: **00965087.0**

(86) International application number:
**PCT/US2000/025473**

(22) Date of filing: **14.09.2000**

(87) International publication number:
**WO 2001/020818 (22.03.2001 Gazette 2001/12)**

(54) **SYSTEM AND METHOD FOR SYNCHRONIZING BASE STATIONS IN CELLULAR AND PCS NETWORKS**

SYSTEM UND VERFAHREN ZUR SYNCHRONIZATION VON BASISSTATIONEN IN ZELLULAREN- ODER PCS NETZWERKEN

SYSTEME ET PROCEDE DE SYNCHRONISATION DE STATIONS DE BASE DE RESEAUX CELLULAIRES OU PCS

(84) Designated Contracting States:
**AT BE CH CY DE DK ES FI FR GB GR IE IT LI LU MC NL PT SE**

(30) Priority: **17.09.1999 US 397430**

(43) Date of publication of application:
**12.06.2002 Bulletin 2002/24**

(73) Proprietor: **QUALCOMM INCORPORATED**
**San Diego, CA 92121-1714 (US)**

(72) Inventor: **SOLIMAN, Samir, S.**
**San Diego, CA 92131 (US)**

(74) Representative: **Walsh, Michael Joseph et al**
**TOMKINS & CO.**
**5, Dartmouth Road**
**Dublin 6 (IE)**

(56) References cited:
**WO-A-99/37037**　　　　**WO-A-99/44306**
**US-A- 5 245 634**　　　　**US-A- 5 510 797**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Description

## BACKGROUND OF THE INVENTION

### I. Field of the Invention

The present invention relates to wireless communications. More particularly, the present invention relates to a novel and improved method and apparatus for synchronizing base stations in a wireless communication system.

### II. Description of the Related Art

The use of code division multiple access (CDMA) modulation techniques is but one of several techniques for facilitating communications in which a large number of system users are present. Although other techniques, such as time division multiple access (TDMA and GSM), frequency division multiple access (FDMA) and AM modulation schemes such as amplitude companded single sideband (ACSSB) are known, CDMA has significant advantages over these other modulation techniques. The use of CDMA techniques in a multiple access communication system is disclosed in U.S. Patent No. 4,901,307, entitled "SPREAD SPECTRUM MULTIPLE ACCESS COMMUNICATION SYSTEM USING SATELLITE OR TERRESTRIAL REPEATERS" and U.S. Patent No. 5,103,459, entitled "SYSTEM AND METHOD FOR GENERATING SIGNAL WAVEFORMS IN A CDMA CELLULAR TELEPHONE SYSTEM", both of which are assigned to the assignee of the present invention. The method for providing CDMA mobile communications was standardized in the United States by the Telecommunications Industry Association in TIA/EIA/IS-95-A entitled "Mobile Station-Base Station Compatibility Standard for Dual-Mode Wideband Spread Spectrum Cellular System", referred to herein as IS-95.

In the IS-95 standard and in U.S. Patent No. 5,103,459, the base stations are synchronized with the global positioning signal (GPS) signal. Timing synchronization allows for faster acquisition and greater reliability in handoff operations. Attaining timing synchronization by means of the GPS signal is well known in the art. Two texts describing methods of attaining timing synchronization by means of the GPS signal are J.J. Spilker, "GPS Signal Structure and Performance Characteristics", Reprint in Global Positioning System, ION, Vol. 1 and Hoffmann-Wekllenhof, Lichtenegger, Collins, "GPS, Theory and Practice", Springer-Verlag.

Common-view is the use of specially arranged, simultaneous view measurements, that maximize satellite elevation angles between pairs of stations. This accurate method of time transfer includes the participation of approximately 50 international laboratories. Development of the common-view schedules has been the responsibility of the Bureau des Poids et Mesures (BIPM), in Sevres, France since July 1986. The common-view schedule that the USNO follows is listed in file GPSD2. Corrections supplied by USNO in near real time can be found in file GPSCV. It should be noted, however, that the common-view method extracts a price. It requires a strict adherence to exactly the same simultaneous observations at both locations, a requirement which is not easy to fulfill except at measurement laboratories. The use of common-view will work if the selective availability does not include the degradation of the ephemeredes, but will be even less robust than if selective availability was not applied.

The method to link the USNO MC to several remote sites is the Precise Time Reference Station (PTRS). Since the common-view requires a strict adherence, we use a smoothing method of all satellite observations for the operational transfer of time to our PTRS. A filtered linear solution, based on all 13-minute satellite observations, allows an estimate of the available precision and is much less sensitive to the slow bias changes in the observation of individual satellites. This procedure has become known as the "melting-pot". The melting-pot method is probably slightly less accurate than the common-view, but is more robust and allows a definitive measure of uncertainty derived from all observations. Since the implementation of selective availability and a full constellation, approximately 90 satellite observations a day, averaging over all satellite observations during a day with a stable clock still allows a very good precision of the filtered mean with great reliability.

Returning to the operation of cellular networks, handoffs can generally be divided into two categories- hard handoffs and soft handoffs. In a hard handoff, when a mobile station leaves an origination base station and enters a destination base station, the mobile station breaks its communication link with the origination base station and thereafter establishes a new communication link with the destination base station. In soft handoff, the mobile station completes a communication link with the destination base station prior to breaking its communication link with the origination base station. Thus, in soft handoff, the mobile station is redundantly in communication with both the origination base station and the destination base station for some period of time.

Soft handoffs are far less likely to drop calls than hard handoffs. In addition, when a mobile station travels near the coverage boundary of a base station, it may make repeated handoff requests in response to small changes in the environment. This problem, referred to as ping-ponging, is also greatly lessened by soft handoff. An exemplary process for performing soft handoff is described in detail in U.S. Patent No. 5,101,501, entitled "METHOD AND SYSTEM FOR PROVIDING A SOFT HANDOFF IN COMMUNICATIONS IN A CDMA CELLULAR TELEPHONE SYSTEM" assigned to the assignee of the present invention.

In IS-95, a base station candidate is characterized by the phase offset of the pseudonoise (PN) sequence of its pilot channel. When the mobile station searches to determine the strength of the pilot signal from a candidate base station it performs a correlation operation wherein the filtered received signal is correlated to a set of PN offset hypotheses. The method and apparatus for performing the correlation operation is described in detail in U.S. Patent No. 5,644,591, entitled "METHOD AND APPARATUS FOR PERFORMING SEARCH ACQUISITION IN A CDMA COMMUNICATION SYSTEM", which is assigned to the assignee of the present invention.

In CDMA systems in the United States, this base station synchronization is achieved by providing each base station with a Global Positioning Satellite (GPS) receiver. However, there are cases where a base station may not be able to receive the GPS signal. For example, within subways and tunnels the GPS signal is attenuated to a degree that prohibits their use for timing synchronization of base stations or micro base stations. In addition, there are national agendas that discourage dependence upon the GPS signal for operation of critical services.

A solution for providing centralized synchronization absent an available GPS signal is described in U.S. Patent No. 5,872,774, entitled "MOBILE STATION ASSISTED TIMING SYNCHRONIZATION IN A CDMA COMMUNICATION SYSTEM", which is assigned to the assignee of the present invention. In addition, the present invention describes a method and system for providing timing synchronization where no base stations rely on a centralized timing signal. The slave base station attains synchronization with the reference base station through messages transmitted from and received by a mobile station in the soft handoff region between the reference base station and the slave base station. First, the round trip delay between the mobile station and the reference base station is measured by the reference base station. Next, the slave base station searches until it acquires the signal transmitted by the mobile station, referred to as the reverse link signal. In response to the acquisition of the reverse link signal, the slave base station adjusts its timing so that the mobile station can acquire its signal, referred to as a forward link signal. This step may be unnecessary if the timing error in the slave base station is not severe.

Once the mobile station acquires the signal from the slave base station, it measures and reports the difference between the amount of time it takes a signal to travel from the reference base station to it and the amount of time it takes a signal to travel from the slave base station to it. The last measurement necessary is a measurement by the slave base station of the time difference between the time it received the reverse link signal from the mobile and station the time it transmitted a signal to the mobile station.

A series of computations are performed upon the measured time values to determine the time difference between the slave base station and an adjustment of the slave base station timing is performed in accordance therewith. It should be noted that all of the measurements mentioned are performed during the normal operation of an IS-95 CDMA communication system.

Additional methods and apparatuses for synchronizing base stations in a wireless communication system are described in copending U.S. Patent Application Serial No. 09/206,037 entitled "Method and Apparatus for Providing Wireless Communications System Synchronization," which is assigned to the assignee of the present invention. The application describes methods by which a wireless communication system keeps itself synchronized without an external reference.

When insufficient traffic is present in the network to maintain synchronization through the use of handoff messages, other methods must be used. One approach involves making direct measurements of the timing between base stations. This is accomplished in one of two ways. The base may interrupt its transmissions on all sectors for a short interval during which it receives forward link signals from other base stations. Given knowledge of the other base station locations, time errors relative to all other base stations may be derived. Alternatively, a base station sends a short signal at high power in the mobile transmit band. This time-of-arrival of this signal is measured by the surrounding base stations and the time errors between pairs of base stations are computed.

In some cases, a base station may be isolated sufficiently from all other base stations in the network such that direct base-to-base measurement is not possible. In this case, a fixed dummy station is placed at a location in the handoff region between the isolated cell and another cell in the network. The fixed dummy station either performs measurements of base station pilots on command of the base and reports the timing information, or sends a burst transmission at a specified time to be measured by the base stations.

An alternative method for synchronizing base stations which are not capable of receiving GPS signals is described in copending U.S. Patent Application Serial No. 09/360,491, which is assigned to the assignee of the present invention. The synchronized timing and frequency generator includes a parent station which maintains system time and frequency values, a first time/frequency transfer unit which receives the system time value from the first parent (master) station and generates corrected system time and frequency values, and a first child (slave) station to which the first time/frequency transfer unit directly communicates the corrected system time and frequency values. This hierarchy of parent station-time transfer unit-child station-parent station may be repeated for as many stations as are deployed in a given wireless network. The corrected system time value may be generated using an adjustment which advances or retards a local free running clock at a child station.

In a preferred embodiment, the present invention is directed to a first time/frequency transfer unit coupled to a first child base station in a sequential time and frequency synchronization system. The first time/frequency transfer unit includes a receiver which acquires a pilot signal set, a demodulator which demodulates a SYNC message of a SYNC channel signal from the parent base station, determines the unit system time from the SYNC message, then advances the unit system time by a predetermined amount corresponding to the propagation delay between the parent station and the first time/frequency transfer unit in order to obtain absolute system time. The first time/frequency transfer unit then uses the absolute system time to generate a periodic pulse train with well defined edges used for controlling the timing of signals sent from the first child station. In a preferred embodiment, the period of the pulse train is an integer multiple of 1 second, and the SYNC message and SYNC channel correspond to the SYNC message and SYNC channel defined in the IS-95A standard. The generator used at the first time/frequency transfer unit to generate the periodic pulse train may include an adjustment which measures a time difference between the output of a free running local clock at the first child base station and the absolute system time determined by the first time/transfer unit, and then retards the output of the free running clock so as to synchronize the output of the free running clock with the absolute system time determined by the first time transfer unit.

Once the timing of the first child base station has been synchronized as described above, the first child base station uses the absolute system determined by the first time/frequency transfer unit to control the time synchronization of signals sent from the first child base station. In addition, the first child base station begins transmitting its own SYNC message on its SYNC channel in accordance with the absolute system time (as determined by the first time/frequency transfer unit) to a further child base station, thereby causing the first child base station to become a further (second) parent base station. The process described above is then repeated by a second time/frequency transfer unit coupled to the second child base station in order to synchronize the absolute system time used by the second child station with that of the first and second parent stations. The process is then preferably repeated for all further base stations in a communication system, thereby resulting in all such base stations being synchronized to a common absolute system time.

In IS-95 communication systems, an overhead message (the Sync Channel Message) is transmitted on the Sync channel. IS-95 base stations transmits a *Sync Channel Message,* with the following format:

| Field | Length (bits) |
|---|---|
| MSG_TYPE ('00000001') | 8 |
| P_REV | 8 |
| MIN_P_REV | 8 |
| SID | 15 |
| NID | 16 |
| PILOT_PN | 9 |
| LC_STATE | 42 |
| SYS_TIME | 36 |
| LP_SEC | 8 |
| LTM_OFF | 6 |
| DAYLT | 1 |
| PRAT | 2 |
| RESERVED | 3 |

MSG_TYPE      Message type.
                         The base station shall set this field to '00000001'.
P_REV           Protocol revision level.
                         The base station shall set this field to "00000010'.
MIN_P_REV      Minimum protocol revision level.
                         Only mobile stations that support revision numbers greater than or equal to this field access the system.
SID              System identification.
                         The base station shall set this field to the system identification number for this cellular system (see 6.6.5.2).
NID              Network identification.

This field serves as a sub-identifier of a system as defined by the owner of the SID.

The base station shall set this field to the network identification number for this network (see 6.6.5.2).

PILOT_PN     Pilot PN sequence offset index.

The base station shall set this field to the pilot PN sequence offset for this base station, in units of 64 PN chips.

LC_STATE -     Long code state.

The base station shall set this field to the long code state at the time given by the SYS_TIME field of this message.

SYS_TIME     System time.

The base station shall set this field to the System Time as of four Sync Channel superframes (320 ms) after the end of the last superframe containing any part of this *Sync Channel Message,* minus the pilot PN sequence offset, in units of 80 ms.

LP_SEC     The number of leap seconds that have occurred since the start of System Time.

The base station shall set this field to the number of leap seconds that have occurred since the start of System

Time, as of the time given by the SYS_TIME field of this message.

LTM_OFF     Offset of local time from System Time.

The current local time of day is equal to SYS_TIME - LP_SEC + LTM_OFF.

The base station shall set this field to the two's complement offset of local time from System Time, in units of 30 minutes.

DAYLT     Daylight savings time indicator.

If the daylight savings time is in effect, the base station shall set this field to '1'. Otherwise, the base station shall set this field to '0'.

PRAT     Paging Channel data rate.

The base station shall set this field to the PRAT field value corresponding to the data rate used by the Paging Channels in the system.

RESERVED -     Reserved bits.

The base station shall set this field to '000'.

One of the most important pieces of information included in the Sync message is the system time (SYS_TIME), which is synchronized with a centralized timing signal. Other digital wireless communications systems, such as the GSM, similarly convey an indication of system time to the remote stations by means of any overhead message.

Recently, the FCC mandated the ability of cellular phones to provide energy information including location information, which will allow emergency services to be rendered despite a user's inability to communicate. One solution to this requirement is to provide a GPS receiver in each handset.

The present invention takes advantage of the anticipated incorporation of GPS receivers into handsets to provide synchronization to base stations unable to receive a GPS signal.

PCT Publication No. WO99/44306, in the name of Motorola Inc., discloses a wireless communication system and method for supplying an identity of a first and second base transceiver station to a mobile station. Based on the identity a first signal is tracked from the first base transceiver station and a second signal from a second base receiver station by the mobile station.

### SUMMARY OF THE INVENTION

The present invention is a novel and improved system and method to synchronize base stations in any digital communication system. The method utilizes a wireless mobile station with GPS capabilities integrated with the wireless mobile station. The final solution of the GPS equations produces position of the phone and a bias term. Both the calculated position and the bias term are used to determine the offset between the wireless mobile local clock and the calculated GPS time. This offset is then used to correct the timing in the base station by feeding back the corrections and mobile station location information to the base station. Several of these measurements can also be used to correct for frequency errors in the base station. The method can also be used to calibrate base station timing in existing networks.

### BRIEF DESCRIPTION OF THE DRAWINGS

The features, objects, and advantages of the present invention will become more apparent from the detailed description set forth below when taken in conjunction with the drawings in which like reference characters identify correspondingly throughout and wherein:

FIG. 1 is a flowchart illustrating the method of synchronizing base stations in the present invention;
FIG. 2 is a block diagram of the elements of the system of the present invention;
FIG. 3 is a block diagram of the base station of the present invention; and

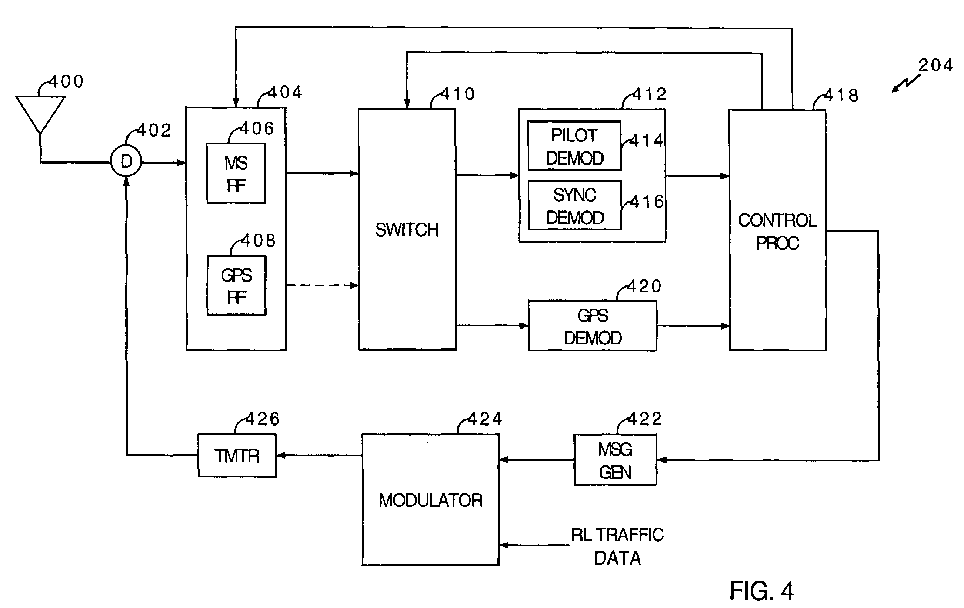

FIG. 4 is a block diagram of the mobile station of the present invention.

## DETAILED DESCRIPTION OF THE PREFERRED EMBODIMENTS

This invention describes an apparatus to help maintain synchronization between elements of a communication system (base stations). It consists of a GPS receiver and two way wireless device (could be one device designed as a dual mode GPS receiver and a two way communication module). When the device is in communication mode, it acquires the system time and keeps track of it. The device is programmed also to retune periodically to GPS frequency.

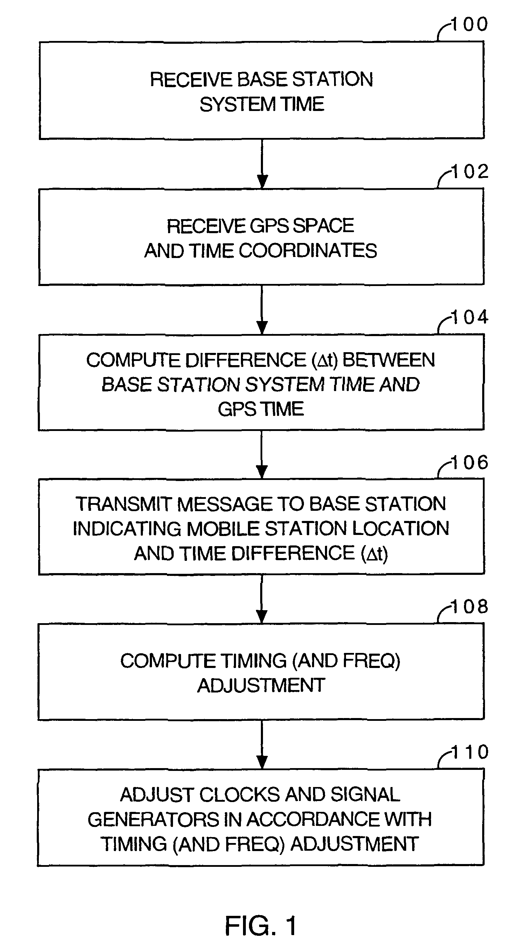

FIG. 1 is a flowchart illustrating the method of the present invention for synchronizing base stations. In block 100, the mobile station receives the base station system time. In the exemplary embodiment of a CDMA communication system, the mobile station first acquires the pilot channel of the base station to attain synchronization with the base station. After acquiring the pilot channel, the mobile station demodulates the sync channel and receives a Sync channel message indicating the system time.

In block 102, the mobile station receives the GPS signal. The mobile station may use timing information from the base station to facilitate the acquisition of GPS satellites. An exemplary method for using timing information from a base station to facilitate acquisition of a GPS signal is described in detail in copending U.S. Patent Application Serial No. 09/040,501, entitled " System and Method for Determining the Position of a Wireless CDMA Transceiver", and copending U.S. Patent Application Serial No. 09/149,428, entitled "Method and Apparatus for Increasing the Sensitivity of a Global Positioning Satellite Receiver", both of which are assigned to the assignee of the present invention.

In the exemplary embodiment, once the device acquires at least four satellites, it will calculate its position and the time bias associated with it The time bias is a measure of the offset between true GPS time and the system time as determined by the communication device.

A coded GPS signal is transmitted from a particular GPS satellite and is received by a GPS sensor where the time that a particular GPS signal phase is detected is determined by units in the receiver called code correlators. The methods used in performing this measurement are well known in the art. What is important for determining navigational parameters are the signal path and the time of transmission from the GPS satellite until the GPS code phase is detected.

The signal path starts at the antenna of the GPS satellite, passes through the ionosphere and troposphere where it is delayed, and is finally received at the GPS receiver's antenna. From the GPS receiver's antenna, the signal travels through a set of analog electronics (e.g., preamplifiers, amplifiers, frequency converters, etc.). This is a signal path that is common for all GPS satellite signals. Finally, the signal is fed into the various code correlators. After performing the necessary correlation operations on the received signals from the four satellites, the GPS receiver is able to determine its location and system time.

In block 104, the mobile station computes the difference between base station system time and GPS time. Knowing the time of transmission of the code phase, one can use the measured time of reception to determine unknown but navigationally important ranges. Knowing four of these ranges enables the receiver to determine its position in three dimensions (x, y, z) and the absolute GPS time. The mobile station then computes a time error signal that is the difference between the timing as provided from the base station and the calculate GPS absolute time ($\Delta t$), which is a function of the distance between the base station and the phone plus any multipath, time offset between the base station system time and true GPS time, and the hardware delay in the phone.

In block 106, the mobile station transmits a message to the base station indicating its coordinates and the calculated time difference between the time of the serving base station and GPS time.

In block 108, the base station computes a timing adjustment factor to synchronize its internal clock to the GPS time. Knowing the position of the serving base station ($x_{bs}$, $y_{bs}$, $z_{bs}$) and the calculated position of the phone (x,y,z), the base station determines a correction to its internal clocks ($\delta t$)as:

$$\partial t = \Delta t + \frac{|x - x_{bs}| + |y - y_{bs}| + |z - z_{bs}|}{c}. \tag{1}$$

In block 110, the base station adjusts its internal clocks in accordance with a correction to its internal clocks ($\delta t$) and at this point the base station is synchronized with GPS time.

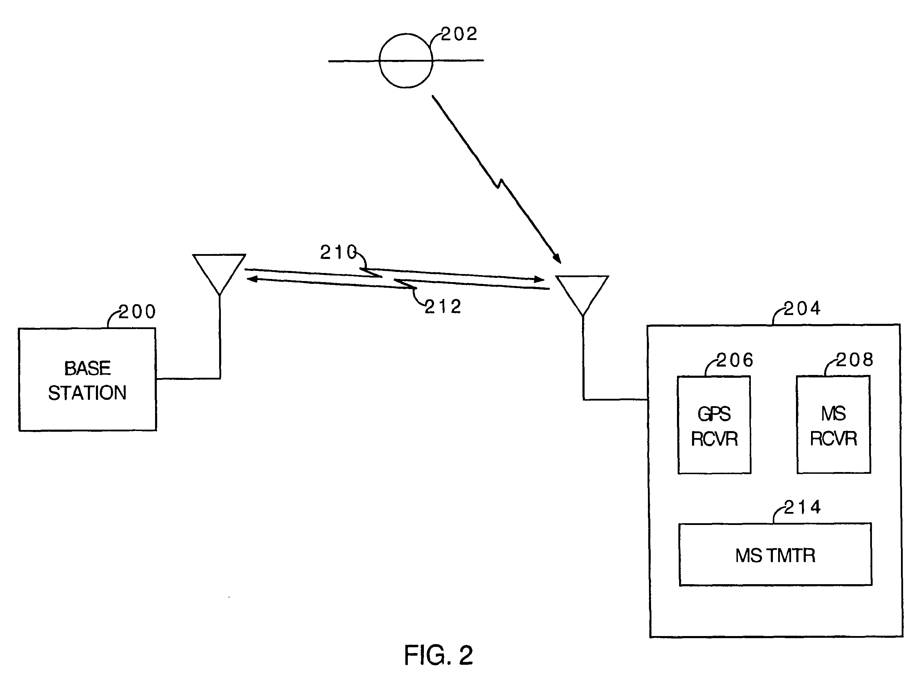

FIG. 2 illustrates the elements necessary to perform the synchronization operation of the present invention. In the exemplary embodiment, base station 200 is a CDMA base station. Base station 200 broadcasts its pilot signal and its sync message to mobile stations in its coverage area on forward link signal 210. Mobile station 204 receives forward link signal **210** by means of mobile station receiver (MS RCVR) **208**. In the exemplary embodiment, mobile station **204** initially acquires the pilot channel signal and then demodulates the sync channel to receive the Sync Message which includes the base station system time.

GPS satellites **202** broadcast the GPS timing signal which is received by mobile station **204** by means of GPS receiver **206**. In the exemplary embodiment, after acquiring the signal from four GPS satellites **202**, mobile station **204** determines its location and GPS absolute time. Mobile station **204** then transmits a message indicative of the computed location coordinates and time on reverse link signal **212**.

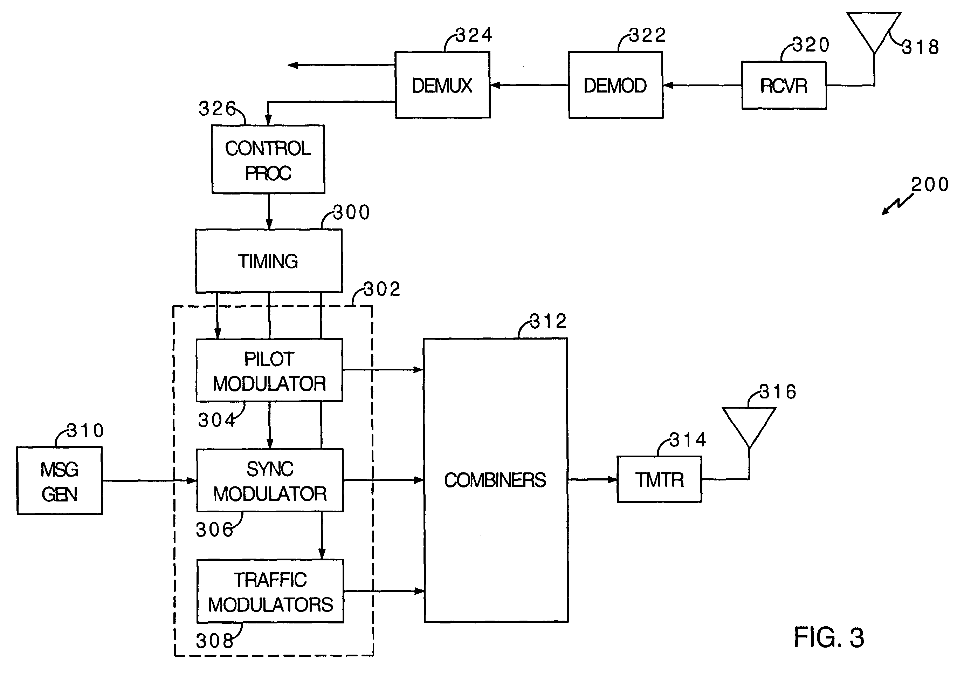

FIG. 3 illustrates a simplified version of base station **200**. In the exemplary embodiment, base station **200** transmits three different types of data including pilot symbols, sync channel message data and traffic channel data. pilot signals are generated by pilot modulator **304** and provided to combiner **312**. The Sync message is provided from message generator **310** to sync modulator 306. the modulated sync channel signal is provided to combiner **312**. Lastly the traffic channels are generated in traffic modulators **308** and provided to combiner **312**.

In the exemplary embodiment of a CDMA system the pilot channel, sync channel and traffic channels are distinguished from one another in code space by using different orthogonal spreading sequences. In alternative embodiments the channels can be distinguished in time slots or in frequency. Moreover, the present invention does not require a pilot channel for its operation, but it is very valuable in CDMA systems.

Combiner **312** combines the pilot channel, the sync channel and the traffic channel and provides the combined signal to transmitter (TMTR) **314**. transmitter **314** up converts, filters and amplifies the signal for transmission through antenna **316**.

The signals are received at mobile station **204** at antenna **400** and provided through duplexer **402** to RF interface **404**. RF interface **404** down converts, filters and amplifies the received signal. In the exemplary embodiment, RF interface **404** down converts the received signal either in accordance with the cellular or PCS carrier frequency or in accordance with the GPS carrier frequency. The operation of RF interface **404** is directed by signals from control processor **418**. In this exemplary embodiment, mobile station **204** cannot simultaneously receive the GPS signal and the forward link signal from base station **200**. Thus in the exemplary embodiment, after receiving the sync channel message, the mobile station, must keep track of the amount of time that elapses between it receipt of the Sync message from base station **200** and the time at which it receives the timing indication from GPS satellites **202**.

In an alternative embodiment, mobile station **204** includes two separate RF interfaces one for down converting, filtering and amplifying the forward link signal from base station **200** and one for receiving the GPS signal from satellites **202**. In this case the sync channel message and the GPS timing can be received simultaneously and can be compared directly.

In the exemplary embodiment, when mobile station **204** is to receive the system timing information from base station **200**, control processor provide a control signal to RF interface **404** directing it to down convert the received signal in accordance with the carrier frequency of the PCS or cellular base station **200**.

In addition, control processor provides a signal to switch **410** directing it to provide the output of RF interface **404** to demodulator **412**. In the exemplary embodiment, demodulator **412** includes a pilot channel demodulator **414** and a sync channel demodulator **416**. In the exemplary embodiment, mobile station initially acquires the forward signal from base station **200** by acquiring the pilot channel. After acquiring the pilot channel, mobile station **204** demodulates the Sync channel message in sync channel demodulator 416 and provides the Sync message to control processor.

After receiving the Sync message indicating the system time of base station **200**, control processor sets a timer (not shown) to track the time interval between receiving the Sync message and the time at which it compute GPS absolute time. Control processor **418** sends a control signal to RF interface **404** which in response down converts the received signal in accordance with the GPS carrier frequency. Control processor also sends a signal to switch **410** directing it to provide the output of RF interface **404** to GPS demodulator **420**. GPS demodulator **420** demodulates the received signal and provides the signal to control processor which compute the location of mobile station **204** and the absolute GPS time.

Control processor **418** sends a signal indicative of the location coordinates (x, y, z) and the time difference ($\Delta$t) to message generator (MSG GEN) **422**. Message generator **422** generates a message that includes the calculated location coordinates (x, y, z) and the time difference ($\Delta$t). The message is provided to modulator **424**. In the exemplary embodiment, modulator **424** modulates the message to provide it for transmission on the traffic channel. In an alternative embodiment, the message may be transmitted as part of an access probe.

The modulated message signal including the calculated location coordinates (x, y, z) and the time difference ($\Delta$t) is upconverted, filtered and amplified by transmitter **426** and provided through duplexer **402** for transmission through antenna **400**.

The message signal is received by base station **200** in antenna **318** and provided to receiver **320**. Receiver **320** down converts, filters and amplifies the received signal and provides the received signal to demodulator **322**. The demodulated signal is provided to demultiplexer **324** which extracts the message portion including the calculated location coordinates (x, y, z) and the time difference ($\Delta$t).

The message is provided to control processor **326**. Control processor **326** computes a timing correction ($\delta$t)

as described above and adjusts the timing of timing element **300**. In the exemplary embodiment, modulator **302** modulates the data for transmission in accordance with timing signals from timing element **300**.

Because frequency errors are simply errors in timing over a given time interval, frequency errors in timing element **300** can also be corrected by making a plurality of timing adjustments over given time intervals. In addition, the present invention can be used to calibrate the timing of base station **200** timing in existing networks by making the corrections as described above and adjusting the base station GPS receiver in accordance with this process.

The previous description of the preferred embodiments is provided to enable any person skilled in the art to make or use the present invention. The various modifications to these embodiments will be readily apparent to those skilled in the art, and the generic principles defined herein may be applied to other embodiments without the use of the inventive faculty.

Thus, the present invention is not intended to be limited to the embodiments shown herein but is to be accorded the widest scope consistent with the principles and novel features disclosed herein.

**Claims**

1. A method for adjusting the timing of a base station comprising the steps of:

   receiving a centralized timing signal at a mobile station;
   acquiring a signal indicative of the system time of said base station at said mobile station;
   computing an error between said centralized timing signal and said system time of said base station;
   transmitting the computed error and mobile station co-ordinates from the mobile station to the base station;
   computing at the base station a timing adjustment factor based on the computed time error, the mobile station co-ordinates and the base station co-ordinates; and
   adjusting said system time of said base station in accordance with said computed error and timing adjustment factor.

2. The method of Claim 1 wherein said centralized timing signal is a Global Positioning signal.

3. The method of Claim 2 wherein said step of receiving a centralized timing signal at said mobile station comprises the steps of:

   acquiring the GPS signal from four satellites; and
   computing the location and absolute time in accordance with said GPS signal from said four satellites.

4. The method of Claim 1 or Claim 3 further comprising the step of computing the propagation delay between said mobile station and said base station.

5. The method of Claim 4 wherein said step of computing the propagation delay is performed in accordance with the location of said mobile station and the location of said base station.

6. The method of Claim 1 wherein said mobile station is a remote station.

7. The method of Claim 1 wherein said base station is a CDMA base station.

8. The method of Claim 7 wherein said step of acquiring a signal indicative of the system time of said base station at said mobile station comprises:

   demodulating a Sync message; and
   extracting an indication of said system time from said Sync message.

9. The method of Claim 1 further comprising the step of transmitting a signal indicative of said time error from said mobile station to said base station.

10. The method of Claim 9 wherein said step of transmitting said signal from said mobile station is performed by transmitting said signal on a traffic channel.

11. The method of Claim 9 wherein said step of transmitting said signal from said mobile station is performed by transmitting said signal on an access channel.

12. A system for adjusting the timing of a base station (200) comprising:

a mobile station (204) for receiving a centralized timing signal, for acquiring a signal indicative of the system time of said base station (200) at said mobile station (204)
said mobile station (200) comprising means for computing (104) an error between said centralized timing signal and said system time of said base station (200);
means for transmitting (106) the computed error and mobile station co-ordinates from the mobile station (204) to the base station (200);
means for computing (108) at the base station (200) a timing adjustment factor based on the computed time error, the mobile station co-ordinates and the base station co-ordinates; and
said base station comprising means for adjusting (110) said system time of said base station in accordance with said computed error and timing adjustment factor.

13. The method of Claim 12 wherein said centralized timing signal is a Global Positioning Signal.

14. The system of Claim 13 wherein said mobile station (204) comprises means for acquiring the GPS signal from four satellites and computing the location and absolute time in accordance with said GPS signal from said four satellites.

15. The system of Claim 12 or Claim 14 wherein said base station (200) comprises means for computing the propagation delay between said mobile station and said base station.

16. The system of Claim 15 wherein said base station (200) computes said propagation delay in accordance with the location of said mobile station (204) and the location of said base station (200).

17. The system of Claim 12 wherein said mobile station (204) is a remote station.

18. The system of Claim 12 wherein said base station is a CDMA base station.

19. The system of Claim 18 wherein said mobile station (204) is for demodulating a Sync message and extracting an indication of said system time from said Sync message.

20. The system of Claim 12 wherein said mobile station (204) is further for transmitting a signal indicative of said time error from said remote station to said base station (200).

21. The system of Claim 20 wherein said mobile station (204) transmits said signal on a traffic channel.

22. The system of Claim 20 wherein said mobile station (204) transmits said signal on an access channel.

**Patentansprüche**

1. Ein Verfahren zum Einstellen bzw. Anpassen des Timings einer Basisstation, wobei das Verfahren folgende Schritte aufweist:

Empfangen eines zentralisierten Timingsignals an der Mobilstation;
Akquirieren eines Signals anzeigend für die Systemzeit der Basisstation an der Mobilstation;
Berechnen eines Fehlers zwischen dem zentralisierten Timingsignal und der Systemzeit der Basisstation;
Senden des berechneten Fehlers und von Mobilstationskoordinaten von der Mobilstation zu der Basisstation;
Berechnen an der Basisstation eines Timinganpassfaktors basierend auf dem berechneten Zeitfehler, den Mobilstationskoordinaten und den Basisstationskoordinaten; und
Anpassen der Systemzeit der Basisstation gemäß dem berechneten Fehler und des Timinganpassfaktors.

2. Verfahren nach Anspruch 1, wobei das zentralisierte Timingsignal ein GPS bzw. Global Positioning Signal ist.

3. Verfahren nach Anspruch 2, wobei der Schritt des Empfangens eines zentralisierten Timingsignals an der Mobilstation folgende Schritte aufweist:

Akquirieren des GPS-Signals von vier Satelliten; und
Berechnen des Ortes und der absoluten Zeit gemäß des GPS-Signals von den vier Satelliten.

4. Verfahren nach Anspruch 1 oder 3, wobei das Verfahren weiterhin folgenden Schritt aufweist:

Berechnen der Ausbreitungsverzögerung zwischen der Mobilstation und der Basisstation.

5. Verfahren nach Anspruch 4, wobei der Schritt des Berechnens der Ausbreitungsverzögerung ausgeführt wird gemäß des Ortes bzw. der Position der Mobilstation und des Ortes der Basisstation.

6. Verfahren nach Anspruch 1, wobei die Mobilstation eine entfernte Station ist.

7. Verfahren nach Anspruch 1, wobei die Basisstation eine CDMA-Basisstation ist.

8. Verfahren nach Anspruch 7, wobei der Schritt des Akquirierens eines Signals anzeigend für die Systemzeit der Basisstation an der Mobilstation Folgendes aufweist:

Demodulieren einer Sync-Nachricht; und
Extrahieren einer Anzeige der Systemzeit aus der Sync-Nachricht.

9. Verfahren nach Anspruch 1, das weiterhin den Schritt des Sendens eines Signals anzeigend für den Zeitfehler von der Mobilstation zu der Basisstation aufweist.

10. Verfahren nach Anspruch 9, wobei der Schritt des Sendens des Signals von der Mobilstation ausgeführt wird durch Senden des Signals auf einem Verkehrskanal.

11. Verfahren nach Anspruch 9, wobei der Schritt des Sendens des Signals von der Mobilstation ausgeführt wird durch Senden des Signals auf einem Zugriff- bzw. Accesskanal.

12. Ein System zum Anpassen des Timings einer Basisstation (200), wobei das System Folgendes aufweist:

eine Mobilstation (204) zum Empfangen eines zentralisierten Timingsignals, zum Akquirieren eines Signals anzeigend für die Systemzeit der Basisstation (200) an der Mobilstation (204);

wobei die Mobilstation (200) Mittel aufweist zum Berechnen (104) eines Fehlers zwischen dem zentralisierten Timingsignal und der Systemzeit der Basisstation (200);
Mittel zum Senden (106) des berechneten Fehlers und von Mobilstationskoordinaten von der Mobilstation (204) zu der Basisstation (200);
Mittel zum Berechnen (108) an der Basisstation (200) eines Timinganpassfaktors basierend auf dem berechneten Zeitfehler, den Mobilstationskoordinaten und den Basisstationskoordinaten; und
wobei die Basisstation Mittel aufweist zum Anpassen (110) der Systemzeit der Basisstation gemäß dem berechneten Fehler und dem Timinganpassfaktor.

13. Verfahren nach Anspruch 12, wobei das zentralisierte Timingsignal ein GPS bzw. Global Positioning Signal ist.

14. System nach Anspruch 13, wobei die Mobilstation (204) Mittel aufweist zum Akquirieren des GPS-Signals von vier Satelliten und zum Berechnen des Ortes und der absoluten Zeit gemäß dem GPS-Signal von den vier Satelliten.

15. System nach Anspruch 12 oder 14, wobei die Basisstation (200) Mittel aufweist zum Berechnen der Ausbreitungsverzögerung zwischen der Mobilstation und der Basisstation.

16. System nach Anspruch 15, wobei die Basisstation (200) die Ausbreitungsverzögerung gemäß dem Ort der Mobilstation (204) und dem Ort der Basisstation (200) berechnet.

17. System nach Anspruch 12, wobei die Mobilstation (204) eine entfernte Station ist.

18. System nach Anspruch 12, wobei die Basisstation eine CDMA-Basisstation ist.

**19.** System nach Anspruch 18, wobei die Mobilstation (204) zum Demodulieren einer Sync-Nachricht dient und zum Extrahieren einer Anzeige der Systemzeit von der Sync-Nachricht.

**20.** System nach Anspruch 12, wobei die Mobilstation (204) weiterhin zum Senden eines Signals anzeigend für den Zeitfehler von der entfernten Station zu der Basisstation (200) dient.

**21.** System nach Anspruch 20, wobei die Mobilstation (204) das Signal auf einem Verkehrskanal sendet.

**22.** System nach Anspruch 20, wobei die Mobilstation (204) das Signal auf einem Zugriffskanal sendet.


**Revendications**

**1.** Procédé de réglage de la synchronisation d'une station de base comprenant les étapes suivantes :

recevoir un signal de synchronisation centralisé au niveau d'un poste mobile ;
acquérir un signal indicatif du temps système de la station de base au niveau du poste mobile ;
calculer une erreur entre le signal de synchronisation centralisé et le temps système de la station de base ;
transmettre l'erreur calculée et les coordonnées du poste mobile à la station de base ;
calculer au niveau de la station de base un facteur de réglage de synchronisation sur la base de l'erreur temporelle calculée, des coordonnées du poste mobile et des coordonnées de la station de base ; et
régler le temps système de la station de base en accord avec l'erreur calculée et le facteur de réglage de synchronisation.

**2.** Procédé selon la revendication 1, dans lequel le signal de synchronisation centralisé est un signal de positionnement global, GPS.

**3.** Procédé selon la revendication 2, dans lequel l'étape de réception d'un signal de synchronisation centralisé au niveau du poste mobile comprend les étapes suivantes :

acquérir le signal GPS à partir de quatre satellites ; et
calculer l'emplacement et le temps absolu en accord avec le signal GPS des quatre satellites.

**4.** Procédé selon la revendication 1 ou 3, comprenant en outre l'étape de calcul du retard de propagation entre le poste mobile et la station de base.

**5.** Procédé selon la revendication 4, dans lequel l'étape de calcul du retard de propagation est réalisée en accord avec l'emplacement du poste mobile et l'emplacement de la station de base.

**6.** Procédé selon la revendication 1, dans lequel le poste mobile est un poste distant.

**7.** Procédé selon la revendication 1, dans lequel la station de base est une station de base CDMA.

**8.** Procédé selon la revendication 7, dans lequel l'étape d'acquisition d'un signal indicatif du temps système de la station de base au niveau du poste mobile comprend :

démoduler un message Sync ; et
extraire une indication du temps système à partir du message Sync.

**9.** Procédé selon la revendication 1, comprenant l'étape d'émission d'un signal indicatif de l'erreur temporelle du poste mobile à la station de base.

**10.** Procédé selon la revendication 9, dans lequel l'étape de transmission du signal à partir du poste mobile est réalisée en émettant le signal sur un canal de communication.

**11.** Procédé selon la revendication 9, dans lequel l'étape d'émission du signal à partir du poste mobile est réalisée en émettant le signal sur un canal d'accès.

**12.** Système de réglage de la synchronisation d'une station de base (200) comprenant :

un poste mobile (204) pour recevoir un signal de synchronisation centralisé pour acquérir un signal indicatif du temps système de la station de base (200) au niveau du poste mobile (204) ;
le poste mobile (204) comprenant des moyens pour calculer (104) une erreur entre le signal de synchronisation centralisé et le temps système de la station de base (200) ;
des moyens (106) pour transmettre l'erreur calculée et les coordonnées du poste mobile (204) à la station de base (200) ;
des moyens (108) de calcul au niveau de la station de base (200) d'un facteur de réglage de synchronisation sur la base de l'erreur de temps calculé, des coordonnées du poste mobile et des coordonnées de la station de base ;
la station de base comprenant des moyens (110) pour régler le temps système de la station de base en accord avec l'erreur calculée et le facteur de réglage de synchronisation.

**13.** Système selon la revendication 12, dans lequel le signal de synchronisation centralisé est un signal de positionnement global, GPS.

**14.** Système selon la revendication 13, dans lequel le poste mobile (204) comprend des moyens pour acquérir le signal GPS à partir de quatre satellites ; et calculer l'emplacement et le temps absolu en accord avec le signal GPS des quatre satellites.

**15.** Système selon la revendication 12 ou 14, dans lequel la station de base (200) comprend des moyens de calcul du retard de propagation entre le poste mobile et la station de base.

**16.** Système selon la revendication 15, dans lequel la station de base (200) calcule le retard de propagation en accord avec l'emplacement du poste mobile (204) et l'emplacement de la station de base (200).

**17.** Système selon la revendication 12, dans lequel le poste mobile (204) est un poste distant.

**18.** Système selon la revendication 12, dans lequel la station de base est une station de base CDMA.

**19.** Système selon la revendication 18, dans lequel le poste mobile (204) est destiné à démoduler un message Sync ; et à extraire une indication du temps système à partir du message Sync.

**20.** Système selon la revendication 12, dans lequel le poste mobile (204) est en outre destiné à l'émission d'un signal indicatif de l'erreur temporelle du poste mobile à la station de base (200).

**21.** Système selon la revendication 20, dans lequel le poste mobile (204) émet ledit signal sur un canal de communication.

**22.** Système selon la revendication 20, dans lequel le poste mobile (204) émet ledit signal sur un canal d'accès.

```
                                                    ┌─100
              RECEIVE BASE STATION
                 SYSTEM TIME

                                                    ┌─102
              RECEIVE GPS SPACE
              AND TIME COORDINATES

                                                    ┌─104
         COMPUTE DIFFERENCE (Δt) BETWEEN
           BASE STATION SYSTEM TIME AND
                   GPS TIME

                                                    ┌─106
         TRANSMIT MESSAGE TO BASE STATION
         INDICATING MOBILE STATION LOCATION
             AND TIME DIFFERENCE (Δt)

                                                    ┌─108
            COMPUTE TIMING (AND FREQ)
                 ADJUSTMENT

                                                    ┌─110
            ADJUST CLOCKS AND SIGNAL
          GENERATORS IN ACCORDANCE WITH
          TIMING (AND FREQ) ADJUSTMENT
```

FIG. 1

FIG. 2

FIG. 3

EP 1 212 852 B1

FIG. 4

EP 1 212 852 B1